# EUROPEAN PATENT SPECIFICATION

(11) **EP 2 473 068 B1**
(45) Date of publication and mention of the grant of the patent: **28.02.2018**
(21) Application number: 10813394.3
(22) Date of filing: 31.08.2010
(51) Int. Cl.: A23G 4/06, A23G 4/08

(54) **GUM BASE**
KAUMASSE
GOMME DE BASE

(30) Priority: 02.09.2009 GB 0915264
(43) Date of publication of application: 11.07.2012
(73) Proprietor: Intercontinental Great Brands LLC, East Hanover, NJ 07936 (US)
(72) Inventor: HARRIS, Lawrence William, Pepper Lane, Reading RG6 6LA (GB); BUFFET, Gaelle Madeleine Claudette, Pepper Lane, Reading RG6 6LA (GB); SOPER, Paul D., Pepper Lane, Reading RG6 6LA (GB)
(74) Representative: Wilson Gunn
(86) International application number: PCT/GB2010/001645
(87) International publication number: WO 2011/027102

(56) References cited:
- WO-A2-2008/002337
- CA-A1- 2 630 280
- US-A1- 2007 098 845
- US-A1- 2007 104 829
- US-A1- 2008 138 465
- US-A1- 2008 233 233

## Description

The present invention relates to a chewing gum base for use in chewing gum compositions wherein the chewing gum base contributes to the ability of the chewing gum compositions and products to degrade over time after chewing. Moreover, the invention relates to chewing gum compositions containing such chewing gum bases.

Conventional chewing gum products are not environmentally-friendly. They can maintain stickiness during and after chewing and adhere to the ground or any other surface with which a gum product may come into contact, if care is not taken with regard to disposal of the gum product. This has been a problem for some time as used chewing gum which has been disposed of litters the streets and is unsightly.

The stickiness of such conventional chewing gum products is derived, in a large part, from the use of elastomer solvents (*i*.*e*. resins) and other "tacky" ingredients (such as wax) during the manufacturing process.

In particular, conventional chewing gums manufactured using elastomer solvents exhibit a continuous or substantially continuous phase when chewed. As the continuous phase is characterized by an amorphous elastomer matrix containing sticky elastomer solvents, the gum bolus that results upon chewing is also sticky.

Many elastomers, and particularly high molecular weight elastomers (*e.g*. those with a molecular weight of 200,000 or greater), used in chewing gum compositions are usually solid at room temperature. They are usually purchased as blocks of solid material and generally require softening using solvents to be useful in chewing gum compositions. Softening elastomers in the absence of elastomer solvents is difficult, because the solid elastomer must still be processed into a continuous homogeneous and flowable mass to be useful in chewing gum compositions.

Although gum products that are manufactured without the use of elastomer solvents and/or other "tacky" ingredients have reportedly been developed, such gum products often rely on "non-conventional" gum ingredients to achieve desired properties. U.S. Patent No. 5,882,702, for example, obviates the need for elastomer solvents by replacing elastomers with a plasticized proteinaceous material such as zein. The incorporation of non-conventional ingredients in gum products, however, often compromises taste and thus can be undesirable from a consumer acceptability standpoint.

Moreover, although gum products that allegedly do not stick to teeth and oral prosthetics during mastication are reported (see *e.g.* U.S. Patent No. 4,518,615), there nevertheless remains a need for chewing gum products that also exhibit reduced stickiness or non-stick properties upon disposal of the gum product subsequent to chewing. In particular, there remains a need for environmentally-friendly chewing gum boluses that exhibit either reduced stickiness to, or do not stick to, or are rapidly degraded on, those surfaces where gum boluses that are improperly disposed of are often found (*e.g.* pavements, shoes, hair, undersides of tables and desks).

There was therefore a need for an environmentally-friendly chewing gum base that was capable of degrading in a relatively short period of time. Such bases have been made and comprise an elastomer and a component comprising hydrolysable units, such as products manufactured and sold under the Gantrez® brand name by International Speciality Products, which acts as an agent to degrade the elastomer in the gum base. The gum base is exposed to a condition (such as chewing) that promotes hydrolysis. Upon hydrolysis, the surface of the gum base is rendered more hydrophilic, thereby reducing the stickiness of the chewing gum and/or rendering the chewing gum more degradable.

US 2007104829, US 2008138465, US 2007098845, US 2008233233, CA 2630280 and WO 2008002337 disclose gum base compositions and chewing gum compositions having non stick or reduced-stick properties and/or increased degradability, comprising a hydrophilic precursor comprising hydrolysable units, having an average molecular weight of at least 1,500,000 Daltons. While the use of hydrolysable units in gum has been proven to provide a degradable gum, it is desirable to increase the efficacy and speed at which the gum degrades.

Therefore, in accordance with the present invention there is provided a gum base according to claim 1, comprising:
a) a hydrophilic precursor component comprising hydrolysable units which is a polymer or salt thereof, the polymer being selected from a copolymer of methyl vinyl ether and maleic anhydride and/or a salt thereof; copolymers of polystyrene and maleic anhydride and/or a salt thereof; polysuccinimide and/or a salt thereof, and combinations thereof, copolymers of vinyl pyrrolidone and vinyl acetate and/or a salt thereof, and alginates and/or a salt thereof; and
b) an elastomer;
   wherein:
   i) the hydrophilic precursor component comprising hydrolysable units has an average molecular weight of at least about 1,500,000 Daltons; and
   ii) the hydrophilic precursor component comprising hydrolysable units has an average particle size of between 300 microns and 1 mm.
It has been found that the degradation properties of a gum base can be improved by using a hydrophilic precursor component comprising hydrolysable units which has a high molecular weight. By a high molecular weight it is meant a molecular weight of at least about 1.5 million Daltons, and which can be anything up to a molecular weight of about 30 million Daltons. Typically, the molecular weight is from about 2 million Daltons to about 6 million Daltons, more typically from about 4 million Daltons to about 5 million Daltons. The degradation properties of a gum base can be improved by using a hydrophilic precursor component comprising hydrolysable units which has a large average particle size. By a large average particle size, it is meant a particle size of at least 300 µm, and which can typically be anything up to 1 mm. Particles of the hydrophilic precursor component comprising hydrolysable units which have been milled are typically of the order of <30 µm in size. Typically, the average particle size of the hydrophilic precursor component comprising hydrolysable units in the invention is from about 300 µm to about 850 µm, more typically from about 400 µm to about 750 µm, more typically from about 500 µm to about 700 µm. However, according to a further embodiment of the invention, the particles should not be so large as to be detectable in the mouth by a consumer. The hydrophilic precursor component comprises a polymer or a salt thereof. More than one hydrophilic precursor component may be used. The polymer is selected from a copolymer of methyl vinyl ether and maleic anhydride and/or a salt thereof, copolymers of polystyrene and maleic anhydride and/or a salt thereof; a copolymer of a hydrophobic monomer and an acid anhydride monomer; polyimides such as polysuccinimide and/or a salt thereof, and combinations thereof, copolymers of vinyl pyrrolidone and vinyl acetate and/or a salt thereof, and alginates and/or a salt thereof. It will be understood that any combination of hydrophilic precursor components and their salts (whether formed before or after formulation) may be used in the present invention.

According to one embodiment of the invention, typical copolymers of methyl vinyl ether and maleic anhydride and/or salts thereof include any of the GANTREZ® AN products and/or salts thereof having a molecular weight of at least about 1.5 million Daltons, and which has a particle size of between 300 microns and 1 mm. Examples of GANTREZ® AN products which may be used in accordance with the invention due to their molecular weight and particle size, include but are not limited to, GANTREZ® AN-169 (which has a molecular weight of about 2,000,000). All of these materials are available from International Specialty Products (ISP).

It will also be understood that references to GANTREZ® products also relate to identical/equivalent unbranded compounds produced by other manufacturers.

Other suitable polymers for use as hydrophilic precursor components, including the aforementioned GANTREZ® products, are more particularly described in "Polymers for Oral Care: Product and Applications Guide", by International Specialty Products ((c) 2003 ISP). Any of the aforementioned polymers and/or any salts thereof may be used alone or in combination.

According to another embodiment of the invention, typical salts of the hydrophilic precursor component include, but are not limited to, any alkali metal salt and/or any alkaline earth metal salt of a hydrophilic precursor component and/or combinations thereof. Particularly useful alkali metal salts include, but are not limited to, the sodium and potassium salts and/or combinations thereof. Particularly useful alkaline earth metal salts of hydrophilic precursor components include, but are not limited to, the magnesium and calcium salts and/or combinations thereof. One typical polymer is GANTREZ® MS, which is a mixed sodium and calcium salt of GANTREZ® S-97, both of which are available from International Specialty Products.

The hydrophilic precursor component may have any suitable molecular weight of at least about 1.5 million Daltons, and it may have any suitable particle size of between 300 microns and 1 mm. Typical molecular weights range from about 1,500,000 to about 5,000,000. When the hydrophilic precursor component is GANTREZ® AN-169, the molecular weight is typically approximately 2,000,000. When the hydrophilic precursor component is GANTREZ® S-97 solution, the molecular weight is typically approximately 1,500,000.

In general, the at least one agent capable of degrading an elastomer, *i.e.* the hydrophilic precursor component, is present in an amount sufficient to substantially degrade the chewing gum product subsequent to mastication over time. Typically, in some embodiments, the hydrophilic precursor component is present in an amount sufficient to substantially degrade the chewing gum product subsequent to mastication within about 25 weeks. More typically, the hydrophilic precursor component is present in an amount sufficient to substantially degrade the chewing gum product subsequent to mastication within about 10 weeks. It will be apparent that the degradation times will be reduced when the chewing gum is subjected to optimum environmental conditions.

Typically, a hydrophilic precursor component is present in a chewing gum composition in an amount sufficient to impart reduced stickiness or non-stickiness to the gum base and/or to promote breakdown of the gum base within days and, more typically, within hours upon exposure to a condition that promotes hydrolysis. It is particularly useful to incorporate a hydrophilic precursor component in the gum bases in an amount that is from about 0.1% by weight to about 10% by weight of the total gum base. More typically, a hydrophilic precursor component is present in the inventive gum bases in an amount that is from about 1% by weight to about 5% by weight. Most typically, a hydrophilic precursor component is present in the inventive gum bases in an amount that is about 5% by weight.

In addition to promoting the fragmentation of a chewing gum composition upon exposure to a condition that promotes hydrolysis, the use of hydrophilic precursor component is beneficial from an organoleptic perspective. In particular, by using a hydrophilic precursor component, it is possible to delay the onset of the hydrophilic character of the gum, thereby enabling the gum to have a perceived texture during mastication.

For illustrative purposes only, the concept of the invention will be explained with reference to the hydrophilic precursor component being a GANTREZ® product, *i.e.* a copolymer of methyl vinyl ether and maleic anhydride and/or a salt thereof. This is of course not to be taken in any way as limiting upon the scope of the invention.

According to a further embodiment of the invention, the hydrophilic precursor component comprising hydrolysable units may be encapsulated or dispersed in a barrier material. This encapsulation or dispersion can help to improve the shelf life of the product. This is believed to improve the shelf life of the composition still further as the Gantrez is protected further from exposure to environmental factors.

As used herein, the term "barrier material" refers to a material which acts to protect the hydrolysable units of the hydrophilic precursor component from exposure to moisture during storage. The hydrolysable units thus remain unreacted while the gum product is sat on a shelf so that they are still available for their purpose of degrading the gum once they have been exposed to conditions of hydrolysis and the gum has been chewed.

According to one embodiment of the invention, typical barrier materials include, but are not limited to, oils and fats, as well as hydrogenates and emulsions (such as water-in-oil or oil-in-water emulsions) thereof. Exemplary barrier materials include, but are not limited to, hydrogenated rape seed oil (HRSO), hydrogenated palm oil, HRSO with Carnauba wax, hydrogenated palm oil with Carnauba wax, polyvinyl acetate (PVA), corn syrup, gum acacia hydrocolloids (including natural gums, such as gum arabic), polysaccharides, polymers (including polyvinyl acetate, polyvinyl laurate, polyvinyl stearate, vinylacetate-vinyllaurate copolymer), shellac, protein and an emulsion of vegetable oil and maltodextrin. If desired, a processing aid may be included with the barrier material. Such processing aids may include sugars, polyols, plasticizers or fillers.

According to one embodiment of the invention, the barrier material should not contain any substance which contains a nucleophilic group capable of reacting with the hydrophilic precursor component. Examples of such nucleophilic groups include, but are not limited to, moieties containing one or more oxygen and/or nitrogen atoms such as OH, NH and water. Which nucleophilic groups are capable of reacting with any given hydrophilic precursor component will be readily apparent to a person skilled in this field.

According to another embodiment of the invention, the barrier material may be able to react with the hydrophilic precursor component. In this embodiment, the amount of hydrophilic precursor component in the gum base is typically greater than in the embodiment where the barrier material does not contain any nucleophilic group capable of reacting with the hydrophilic precursor component. The barrier material then reacts with the outer portion of the hydrophilic precursor component only, thus effectively providing a further protective barrier layer between the hydrolysable units in the hydrophilic precursor component and the atmosphere.

The elastomer employed in the gum base may vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums.

Illustrative and non-limiting examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof. Specific examples of elastomers include polyisobutylene, styrene butadiene rubber, butyl rubber, and combinations thereof.

Additional useful polymers include polybutylmethacrylate/acrylic acid copolymers, polyvinylacetate/vinyl alcohol copolymers, microcrystalline cellulose, sodium carboxymethyl cellulose, hydroxypropylmethyl cellulose, crosslinked cellulose acetate phthalate, crosslinked hydroxymethyl cellulose polymers, zein, crosslinked polyvinyl pyrrolidone, polymethylmethacrylate/acrylic acid copolymers, copolymers of lactic acid, polyhydroxyalkanoates, plasticized ethylcellulose, polyvinyl acetatephthalate and combinations thereof.

In general, the elastomer employed in the gum base may have an average molecular weight of at least about 200,000. Typically, the elastomer employed in the gum base has an average molecular weight from about 200,000 to about 2,000,000.

In some embodiments, it may be particularly useful to include an elastomer composition including a predominant amount of a material selected from polyisobutylene, butyl rubber, butadiene-styrene rubber and combinations thereof, the elastomer composition having an average molecular weight of at least about 200,000. By "predominant" is meant that the composition includes greater than about 50% to about 98% of a material selected from polyisobutylene, butyl rubber, butadiene-styrene rubber and combinations thereof.

The amount of elastomer employed in the gum base may vary depending upon various factors such as the type of gum base used, the consistency of the gum composition desired and the other components used in the composition to make the final chewing gum product. In general, the elastomer may be present in the gum base in an amount from about 1% to about 30% by weight of the gum base. Typically, the elastomer is present in an amount from about 2% to about 15% by weight of the gum base. More typically, the elastomer is present in the gum base in an amount from about 3% to about 10% by weight of the gum base. In some embodiments, the elastomer will be present in the gum base in an amount from about 10% to about 60% by weight, typically from about 35% to about 40% by weight.

As used herein, any reference to a gum composition may include both of a chewing gum composition or a bubble gum composition.

As used herein, the term "degradation" refers to any process whereby a deposited gum cud becomes brittle and begins to breakdown into particles and/or becomes less adhesive, either by the effect of environmental factors including weather conditions such as rain, sun, frost, etc., including cycling weather conditions, and/or by the effect of cleaning processes including the action of detergents. Moreover, as used herein, the term "degradable" refers to the tendency of a deposited gum base to break up in the environment due the effect of weather conditions (rain, sun, frost, etc.), such as cycling weather conditions, and/or through the action of cleaning processes and/or detergents.

As used herein, the phrase "hydrophilic precursor component(s)" refers to any component(s) that is/are capable of promoting hydrolysis and which also has hydrophobic character. Although the hydrophilic precursor component contains a hydrophilic portion (or hydrophilic portions) which allow it to attract water and promote hydrolysis, at least a significant portion of the component is hydrophobic, which allows the component to be readily dispersed in a gum base, and which imparts an overall hydrophobic character.

Moreover, it will be understood that the term hydrophilic precursor component(s) includes hydrophilic precursor component(s) and salts thereof, whether such salts are formed before or after formulation, and any combination thereof. Hydrophilic precursor components include, for example, any component that is capable of hydrolysing during mastication to promote the breakdown of a chewing gum composition and/or to reduce adhesion of a chewing gum composition to a surface, including salts of such components, whether formed before or after formulation. As such, hydrophilic precursor components include any component having at least one hydrolysable unit, including salts of components having at least one hydrolysable unit. Typical salts of components having at least one hydrolysable unit include, for example, alkali metal salts of components having at least one hydrolysable unit and alkaline earth metal salts of components having at least one hydrolysable unit.

As used herein, the term "hydrolysable units" refers to any portion of a molecule that is capable of being hydrolysed. Examples of hydrolysable units include, for example, ester bonds and ether bonds.

As used herein, the phrase "condition that promotes hydrolysis" refers to any condition that causes the hydrolysis of at least one hydrolysable unit. Such conditions include, for example, moisture, mastication in the mouth, and exposure to a hydrolysis-promoting component, and exposure to cycling weather conditions of rain and sunlight.

As used herein, the term "hydrolysis-promoting component" refers to any component that promotes the hydrolysis of a hydrolysable unit. Such components include, for example, any alkaline component having a pH from about 8 to about 14. Examples of hydrolysis-promoting components include, for example, detergents having a basic pH, saliva, rain water, and deionised water. In some embodiments, hydrolysis-promoting components may include filler components such as talc, carbonate-based fillers, such as calcium carbonate, and dical.

As used herein, the term "non-stick and/or increased degradability inducing component(s)" refers to components that are incorporated in a gum composition such that the gum composition exhibits reduced stickiness and/or increased degradability as compared to the same gum composition in the absence of the non-stick inducing components. It will be understood that the term "non-stick and/or increased degradability inducing component(s)" includes non-stick inducing component(s), increased degradability inducing component(s), and component(s) that act both as a non-stick inducing agent and as an increased degradability inducing component. It will be further understood that in some embodiments, the non-stick inducing component may be the same as the increased degradability inducing component, and in some embodiments it may be different.

Typically, the non-stick and/or increased degradability inducing components have a number of advantages, including facilitating the softening of solid elastomer components in the production of a gum base as well as preventing or reducing the tendency of chewing gum compositions and products made therefrom from sticking to surfaces such as packages, teeth, oral prosthetics such as implants and dentures, as well as to concrete, stone, plastic, wood, pavement, brick, glass and various other similar surfaces. The non-stick and/or increased degradability inducing component may be any component that is capable of hydrolysing during mastication to promote breakdown of a chewing gum composition and/or to reduce adhesion of a chewing gum composition to a surface. Moreover, the non-stick and/or increased degradability inducing components may be any component that causes the final (as defined herein) Tg of an elastomer used in a chewing gum composition to change no more than about three degrees, up or down from the initial Tg (as defined herein) during processing. The non-stick and/or increased degradability inducing components also may be any components that serve as a release agent, as defined herein. Moreover, the non-stick and/or increased degradability inducing components may be any components that promote the degradation of a chewing gum composition. In particular, the non-stick and/or increased degradability inducing component may be any component that serves as a hydrophilic precursor component, as defined herein. Furthermore, the non-stick and/or increased degradability components may be any components that crystallize or form domain regions in the gum base elastomers. Additionally, the non-stick and/or increased degradability inducing components may be any components that have a hydrophobic portion and a hydrophilic portion, wherein the hydrophobic portion is capable of orienting inwardly within a gum bolus and the hydrophilic portion is capable of orienting outwardly within a gum bolus. Non-stick and/or increased degradability inducing components include, for example, oils and other fats that may be included in a gum composition in an amount sufficient to render the composition non-sticky, both during processing and after processing of a chewing gum subsequent to chewing of the gum products made therefrom. These non-stick and/or increased degradability inducing components may be used to replace some or all of the elastomer solvent materials, such as resins and waxes conventionally used in chewing gum compositions. The non-stick and/or increased degradability inducing components, when added to a gum base may also act as an elastomer processing aid to permit softening processing of the elastomer from a solid to a useful gum base material.

The chewing gum base containing the same will be less sticky or exhibit less stickiness and/or will exhibit enhanced degradability compared to a chewing gum base not including a non-stick and/or increased degradability inducing component.

The non-stick and/or increased degradability inducing component may be present in amounts of about 10% to about 60%, typically about 20% to about 50%, more typically about 30% to about 40%, by weight of the chewing gum base, typically about 20% to about 50%.

As used herein, the term "Tg" refers to the glass transition temperature of an elastomer used in chewing gum compositions as measured at any time before or after processing of the elastomer. More particularly, the term "Tg initial" refers to the glass transition temperature of an elastomer prior to processing of the elastomer into a substantially homogenous mass in the presence of a non-stick inducing component. The term "Tg final" refers to the glass transition temperature of an elastomer subsequent to processing of the elastomer into a softened mass useful for gum base.

Tg is generally understood to be the temperature below which molecules have very little mobility. On a larger scale, polymers are rigid and brittle below their glass transition temperature and can undergo plastic deformation above it. Tg is usually applicable to amorphous phases and is commonly applicable to glasses, plastics and rubbers. In polymers, Tg is often expressed as the temperature at which the Gibbs free energy is such that the activation energy for the cooperative movement of a significant portion of the polymer is exceeded. This allows molecular chains to slide past each other when a force is applied.

As used herein, the phrase "release properties" means properties that allow a chewing gum base and/or chewing gum product to exhibit reduced adherence to a surface.

As used herein, the phrase "limited capability to plasticize polymers" means that that a component will not change the Tg of a gum base more than about plus/minus three degrees upon incorporation of the component into the gum base.

As used herein, the term "processing" refers to any step taken during the manufacture of a gum base and/or chewing gum product, including any step that occurs when manufacturing a chewing gum product by means of batch systems, continuous systems, or any other system manufacturing system known in the art. As used herein, the term processing includes the process of "masticating an elastomer" so that it is suitable for inclusion in a chewing gum product.

As used herein, the phrase "non-conventional gum ingredients" refers to ingredients not conventionally included in chewing gum products and includes, for example, ingredients such as zein and seed oils from the plant genus Cuphea.

As used herein, the phrase "conventional gum ingredients" refers to ingredients traditionally included in chewing gum products such as elastomers and elastomer solvents.

As used herein, the term "surface", when used in connection with non-stick and/or degradable properties, refers to any surface with which a chewing gum base, chewing gum composition, chewing gum product or chewing gum bolus comes into contact. Such surfaces include without limitation, for example, the following: any surface in the oral cavity such as the surface of a tooth or the surface of any dental or orthodontic device contained in the oral cavity; any surface on a human body including the skin, such as the skin on the face, and hair; and any surface external to a human body, such as the surface of pavements, sidewalks, roadways, brick, glass, wood, plastic, stone, furniture, carpeting, clothing, the soles of footwear including shoes or sneakers, cardboard, paper, metal, and surfaces of porous nature to which conventional gum ingredients stick and are difficult to remove.

According to further embodiments of the invention, one or more further components may be added to the gum base as desired. These components include but are not limited to a solvent or softener for the elastomer; at least one component selected from a sweetener, a flavour, a sensate and combinations thereof; a texture-modifier; an emulsifier; a plasticizer, a filler/bulking agent; a wax; a hydrophilic, water-absorbing polymer; an antioxidant; a colouring agent; a preservative; photosensitizers; warming and tingling agents; throat-soothing agents; spices; herbs and herbal extracts, tooth-whitening agents; breath-freshening agents; vitamins and minerals; bioactive agents; caffeine; nicotine; or pharmaceutically active agents.

The use of one or more elastomer solvents is not required to masticate the elastomer during the manufacturing process. It may be present in limited amounts, but can lessen the non-stick properties of the gum base of the invention if used in amounts above about 5% by weight of the gum base. In certain embodiments of the invention, elastomer solvents may be used in amounts of about 4% to about 5% by weight of the gum base to provide non-stick properties which are sufficient to provide non-stick properties to teeth, dentures, oral implants and other oral prosthetics.

In some embodiments, the gum base may also contain less than conventional amounts of elastomer solvents to aid in softening the elastomer component. In particular, in some embodiments, such solvents are not required, but may be used in limited amounts along with the non-stick and/or degradability inducing components. By less than conventional amounts is meant that the elastomer solvent is employed in the gum base, for example, in amounts from about 0% to about 5.0% and typically from about 0.1% to about 3.0%, by weight, of the gum base. In some embodiments, the gum base includes a maximum of about 5.0% by weight of an elastomer solvent. In other embodiments, the gum base is free of added elastomer solvents.

In other embodiments, conventional amounts of elastomer solvents are incorporated in the gum bases to aid in softening the elastomer component. Elastomer solvents which may be used include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Further examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof.

Typically, the incorporation of an elastomer solvent in the gum base does not interfere with the non-stick inducing components of the gum base and/or with the ability of the gum base to degrade. In particular, in some embodiments where non-stickiness or reduced stickiness is desired, the elastomer solvent typically softens the gum base without contributing to stickiness. Moreover, the Tg of the gum base typically does not change more than +/- three degrees upon incorporation of the elastomer solvent in the gum base in some embodiments where non-stickiness or reduced stickiness is desired.

Typically, a conventional amount of an elastomer solvent for use in the gum base of the invention may be an amount from about 2.0% to about 15%, more typically from about 5% by weight to about 15% by weight of the gum base, even more typically, in amounts from about 7% by weight of the gum base to about 11% by weight of the gum base.

In some embodiments, the elastomer solvent employed may have at least one hydrophilic portion and at least one hydrophobic portion such that the hydrophilic portion orients inwardly within a gum base and such that the hydrophilic portion orients outwardly within a gum base made from elastomers. Suitable elastomer solvents having at least one hydrophilic portion and at least one hydrophobic portion include, for example, methyl ester liquid rosin. In some embodiments, it is especially useful to incorporate a methyl ester liquid rosin in relatively low amounts. Methyl ester liquid rosin interferes less with the non-stick and/or degradability inducing components as compared to other resins, but yet acts to increase softening of the gum base without contributing to increased stickiness when used in combination with the non-stick inducing component.

Typically, in some embodiments, a methyl ester liquid rosin is incorporated in a gum base in an amount from about 0.5% to about 5.0%, more typically from about 1.0% to about 3.0% by weight of the gum base.

Combinations of any two or more of these components may be used in the gum base of the invention as desired.

The gum base also may include an one or more components selected from, but not limited to, a sweetener, a flavour, a sensate and combinations thereof; a texture-modifier; a solvent or softener for the elastomer; an emulsifier; a plasticizer, a filler/bulking agent; a wax; a hydrophilic, a water-absorbing polymer; an antioxidant; a colouring agent; a preservative; a photosensitizer; a warming and/or tingling agent; a throat-soothing agent; a spice; a herb and/or herbal extract, a tooth-whitening agent; a breath-freshening agent; a vitamin and/or mineral; a bioactive agent; caffeine; nicotine; or a pharmaceutically active agent.

Any of the aforementioned additive components for use in a chewing gum composition, as well as other conventional additives known to one having ordinary skill in the art, such as thickeners, may be incorporated into the chewing gum base of the chewing gum compositions or any coating that the chewing gum product may contain.

Examples of each of these components will be readily apparent to a person skilled in the art of chewing gum manufacture, but such examples and their respective amounts in a chewing gum composition are also given in US 2007/104829 to Soper et al. According to another embodiment of the invention, there is provided a composition comprising a hydrophilic precursor component having hydrolysable units which is encapsulated or dispersed in a barrier material, wherein the hydrophilic precursor component comprising hydrolysable units has an average molecular weight of at least about 1,500,000 Daltons, and wherein the hydrophilic precursor component comprising hydrolysable units has an average particle size of between 300 microns and 1 mm. The hydrophilic precursor component having hydrolysable units and the barrier material may be any of those which have been previously detailed hereinabove for the gum base embodiment of the invention.

According to one embodiment of the invention, the hydrophilic precursor component having hydrolysable units typically comprises a copolymer of methyl vinyl ether and maleic anhydride or a salt thereof. The copolymer of methyl vinyl ether and maleic anhydride or a salt thereof is typically one which is currently sold under the Gantrez® trade name.

According to this disclosure, there is provided a method of preparing a gum base, comprising the steps of:
(a) providing at least one hydrophilic precursor component including hydrolysable units, the hydrophilic precursor component having an average molecular weight of at least about 1,500,000 Daltons and an average particle size of between 300 microns and 1 mm; and
(b) mixing the hydrophilic precursor component with an elastomer.

In some embodiments, the methods of making a chewing gum base include providing at least one elastomer and mixing at least one non-stick and/or degradability inducing component with the elastomer to form a chewing gum base, wherein the at least one non-stick and/or degradability inducing component softens the elastomer without causing the chewing gum base to become sticky. In such embodiments, the chewing gum base has reduced stickiness in the presence of the non-stick and/or degradability inducing component as compared to in the absence of the non-stick and/or degradability inducing component.

According to this disclosure, there is provided a method of preparing a chewing gum composition comprising the steps of:
(a) providing a gum base including (i) at least one hydrophilic precursor component including hydrolysable units, the hydrophilic precursor component having an average molecular weight of at least about 1,500,000 Daltons and an average particle size of between 300 microns and 1 mm; and (ii) an elastomer; and
(b) combining the gum base with at least one component selected from a sweetener, a flavour, a sensate, and combinations thereof.

According to this disclosure, there is provided a method of increasing the degradability of a chewing gum base or chewing gum composition comprising the steps of:
(a) providing a gum base or chewing gum composition including (i) at least one hydrophilic precursor component including hydrolysable units, the hydrophilic precursor component having an average molecular weight of at least about 1,500,000 Daltons and an average particle size of between 300 microns and 1 mm; and (ii) an elastomer; and
(b) exposing the chewing gum base or chewing gum composition to mastication in the oral cavity of an individual; wherein at least one hydrolysable unit of the hydrophilic precursor component begins to hydrolyse or hydrolyses upon mastication in the oral cavity.

According to the present disclosure, there is provided a method of increasing the degradability of a gum base or chewing gum composition, comprising the steps of:
a) providing a gum base or chewing gum composition including (i) at least one hydrophilic precursor component including hydrolysable units, the hydrophilic precursor component having an average molecular weight of at least about 1,500,000 Daltons and an average particle size of between 300 microns and 1 mm; and (ii) an elastomer; and
b) exposing the gum base or chewing gum composition to a source of water; wherein at least one hydrolysable unit of the polymer begins to hydrolyze or hydrolyzes upon contact with the water.

According to the present disclosure, there is provided a use of a hydrophilic precursor component comprising hydrolysable units, wherein the hydrophilic precursor component has an average molecular weight of at least about 1,500,000 Daltons and an average particle size of between 300 microns and 1 mm, in improving the degradability of a gum base or chewing gum composition.

Typically, in the above methods, there is also a step of comprising providing a solvent or softener for the elastomer.

In some embodiments, a chewing gum base according to the invention may be incorporated in a chewing gum composition in an amount from about 5% to about 95%, more typically from about 28% to about 42%, and even more typically from about 28% to about 30% by weight of the total chewing gum composition. In the case of centre-filled chewing gum compositions, this weight percent may be based on the gum region rather than the centre-filled region.

The chewing gum compositions of the present invention may be formed into a variety of shapes and sizes and may take various product forms, including without limitation, sticks, slabs, chunks, balls, pillows, tablet, pellet, centre-filled, pressed tablet, deposited, compressed chewing gum or any other suitable format, as well as coated and uncoated forms.

When the chewing gum compositions are formed into coated products, the coating may be applied by any method known in the art. The coating composition may be present in an amount from about 2% to about 60%, more typically from about 25% to about 35%, or still more typically from about 25% to about 45%, and even more specifically, in an amount of about 30% by weight of the gum piece.

Such coated chewing gums are typically referred to as pellet gums. The outer coating may be hard or crunchy. Any suitable coating materials known to those skilled in the art may be employed. Typically, the outer coating may include sorbitol, maltitol, xylitol, isomalt, erythritol, isomalt, and other crystallisable polyols; sucrose may also be used. Furthermore, the coating may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include coloured flakes or speckles. If the composition includes a coating, it is possible that one or more oral care actives can be dispersed throughout the coating. This is especially typical if one or more oral care actives are incompatible in a single phase composition with another of the actives. Flavours may also be added to yield unique product characteristics.

In the case of centre-filled chewing gum products, the coating may also be formulated to assist with increasing the thermal stability of the gum piece and preventing leaking of the liquid fill. In some embodiments, the coating may include a gelatin composition. The gelatin composition may be added as a 40% by weight solution and may be present in the coating composition from about 5% to about 10% by weight of the coating composition, and more typically about 7% to about 8%. The gel strength of the gelatin may be from about 130 bloom to about 250 bloom.

Other materials may be added to the coating to achieve desired properties. These materials may include without limitations, cellulosics such as carboxymethyl cellulose, gelatin, pullulan, alginate, starch, carrageenan, xanthan gum, gum arabic and PVA.

The coating composition may also include a pre-coating which is added to the individual gum pieces prior to an optional hard coating. The pre-coating may include an application of PVA. This may be applied as a solution of PVA in a solvent, such as ethyl alcohol. When an outer hard coating is desired, the PVA application may be approximately 3% to 4% by weight of the total coating or about 1% of the total weight of the gum piece (including a liquid-fill, gum region and hard coating).

Some embodiments extend to methods of processing an elastomer in a gum base. In particular, some embodiments extend to methods of processing an elastomer for use in a gum base without substantially changing the Tg of the gum base as measured by differential scanning calorimetry (DSC). Such methods include the step of mixing at least one elastomer and at least one fat.

Other embodiments extend to methods of processing a solid elastomer that include: providing a solid elastomer composition suitable for use in a chewing gum base and combining with the solid elastomer composition a non-stick and/or degradability inducing component including at least one fat having an HLB range of about 3.5 to about 13. In such methods, the non-stick and/or degradability inducing component is present in amounts sufficient to permit mastication of the solid elastomer composition into a homogenous mass.

In some embodiments, the above-described methods of processing an elastomer are carried out in the presence of very low amounts of elastomer solvent. In such embodiments, the elastomer solvent includes a maximum of about 5.0% of any gum base made by masticating an elastomer as described above.

In other embodiments, the above-described methods of processing an elastomer are carried out in the absence of added elastomer solvent.

In additional embodiments, the methods of making a chewing gum base include processing an elastomer for use in a gum base without substantially changing the Tg of the gum base as measured by DSC by mixing at least one elastomer and at least one fat or oil.

Moreover, in further embodiments, the methods of making a chewing gum base include providing a solid elastomer composition suitable for use in a chewing gum base and combining with the solid elastomer composition a non-stick and/or degradability inducing component that includes at least one fat or oil having an HLB range of about 3.5 to about 13. In such methods, the non-stick and/or degradability inducing component is present in amounts sufficient to permit processing of the solid elastomer composition into a softened, processable mass.

In some embodiments, the above-described methods of making a gum base may be carried out in the presence of lower than conventional amounts of elastomer solvent. In such embodiments, the elastomer solvent includes a maximum of about 5.0% of the gum base. Typically, an elastomer solvent can be mixed with an elastomer and non-stick and/or degradability inducing component to soften the elastomer without causing the resultant chewing gum base to become sticky.

In other embodiments, the above-described methods of making a gum base are carried out in the absence of added elastomer solvent.

The manner in which the gum base components are mixed is not critical and such mixing is performed using standard apparatuses known to those skilled in the art. In a typical method, at least one elastomer is admixed with at least one mastication processing aid, which for purposes of the disclosure includes one or more hydrophilic precursor component comprising hydrolysable units, and agitated for a period of from about 1 to about 30 minutes. The remaining ingredients, such as the texture-modifier and/or softener are then admixed, either in bulk or incrementally, while the gum base mixture is blended again for about 1 to about 30 minutes.

The products may be prepared using standard techniques and equipment known to those skilled in the art, which processes generally involve melting the gum base, incorporating the desired ingredients while mixing and forming the batch into individual chewing gum pieces. The apparatus useful in accordance with the embodiments described herein includes mixing and heating apparatuses well-known in the chewing gum manufacturing arts, and therefore the selection of the specific apparatus will be apparent to the artisan. For general chewing gum preparation processes which are useful in some embodiments see U.S. Patent Nos. 4,271,197 to Hopkins et al., 4,352,822 to Cherukuri et al. and 4,497,832 to Cherukuri et al..

For instance, centre-fill chewing gum embodiments may include a centre-fill region, which may be a liquid or powder or other solid, and a gum region. Some embodiments also may include an outer gum coating or shell, which typically provides a crunchiness to the piece when initially chewed. The outer coating or shell may at least partially surround the gum region. Centre-fill chewing gums and methods of preparing same are more fully described in assignee's co-pending U.S. patent application Ser. No. 10/925,822, filed on Aug. 24, 2004 and assignee's co-pending U.S. patent application Ser. No. 11/210,954, filed on Aug. 24, 2005, both entitled "Liquid-Filled Chewing Gum Composition". Some other chewing gum embodiments may be in a compressed gum format, such as, for example, a pressed tablet gum. Such embodiments may include a particulate chewing gum base, which may include a compressible gum base composition and a tableting powder. Compressed chewing gums are more fully described in assignee's co-pending U.S. Provisional Application No. 60/734,680, filed on Nov. 8, 2005, and entitled "Compressible Gum System". In some embodiments the gum base is also free of added waxes.

The features and advantages of the present invention are more fully shown by the following examples and Figures which are provided for purposes of illustration, and are not to be construed as limiting the invention in any way.
Figure 1 shows a scatter plot of a control sample against samples having specific viscosities of 3 and 6 (SV 3 and SV 6) for the greenhouse trial on expansion of fresh gum samples over time.
Figure 2 shows a scatter plot of a control sample against SV3 and SV6 samples for a concrete slab trial.
Figure 3 shows a scatter plot depicting a comparison of fresh gum samples assessed in a greenhouse trial and from the concrete slab trial.
Figure 4 shows a scatter plot of a control sample against samples having SV 3 and SV 6 for the greenhouse trial on fresh gum samples.

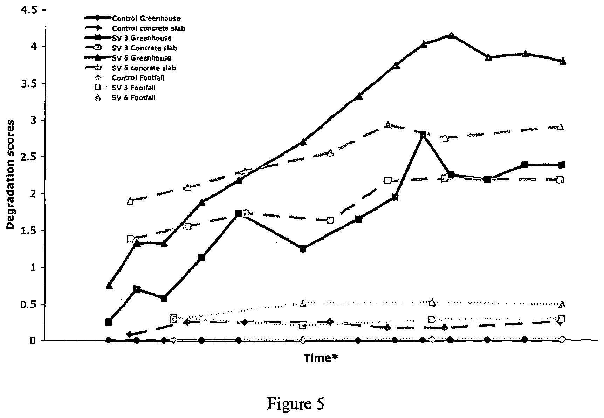

Figure 5 shows a comparison of greenhouse results, concrete slab results and footfall trial results for fresh gum samples.

### EXAMPLES

### High Molecular Weight Components (Example not according to the invention)

Ten batches of Gantrez AN were obtained. Five batches have a regular specific viscosity (SV), the other five have an intermediate SV, providing a spread of SVs from 2.6 to 7.3. The 'regular' batches have an SV of about 3 SV3, while the 'intermediate' batches have an SV of about 6 SV6. The SV is used as a means to define the molecular weight of the polymer; an SV3 corresponds to a molecular weight of about 2 million Daltons, while an SV6 is approximately double this figure.

Gum batches were made from each SV batch and tested.

The gum samples were then assessed for degradation efficacy. The samples were placed in a greenhouse for 2 weeks, and on a concrete slab in a controlled environment for 8 weeks. Six replicates were assessed per batch per test.

The degradation of the samples was assessed on a scale of 0-6 according to appearance, with 6 denoting a complete removal of cud. Cuds were assessed at regular intervals and the extent of degradation was assessed visually against the scale as detailed below:
0 - no break down
1 - swelling to form a doughnut shape
2 - swelling throughout the cud
3 - maximum expansion and foaming
4 - degradation and cracking
5 - removal of gum surface
6 - complete removal of cud

### Results of greenhouse trial:

Chewed cuds were deposited on a flooring tile. The tile was placed in a polyethylene tunnel in a greenhouse and subject to regular spraying with water. Cuds were assessed at regular intervals and the extent of degradation was assessed visually against the scale as detailed above. The degradation scores are shown in Table 1.

**Table 1**

| Day | Control | | SV 3 | | SV 6 | |
|---|---|---|---|---|---|---|
| | Mean | Std dev | Mean | Std dev | Mean | Std dev |
| 3 | 0.08 | 0.20 | 1.38 | 0.49 | 1.90 | 0.64 |
| 5 | 0.25 | 0.27 | 1.55 | 0.46 | 2.08 | 0.60 |
| 7 | 0.25 | 0.27 | 1.73 | 0.47 | 2.30 | 0.50 |
| 10 | 0.25 | 0.27 | 1.63 | 0.54 | ' 2.55 | 0.56 |
| 12 | 0.17 | 0.26 | 2.17 | 0.51 | 2.93 | 0.18 |
| 14 | 0.17 | 0.26 | 2.20 | 0.43 | 2.75 | 0.31 |
| 18 | 0.25 | 0.27 | 2.18 | 0.31 | 2.90 | 0.20 |
| **Average** | **0.20** | 0.25 | **1.84** | 0.56 | **2.49** | 0.59 |

The control sample data was taken from an average from 6 cuds obtained from one sample. The control sample contained no Gantrez.

The SV3 sample data was taken from an average of 5 samples obtained from 6 cuds (SV of the Gantrez being from 2.6 to 4.3).

The SV6 sample data was taken from an average from 5 samples obtained from 6 cuds (SV of the Gantrez being from 5.5 to 7.3).

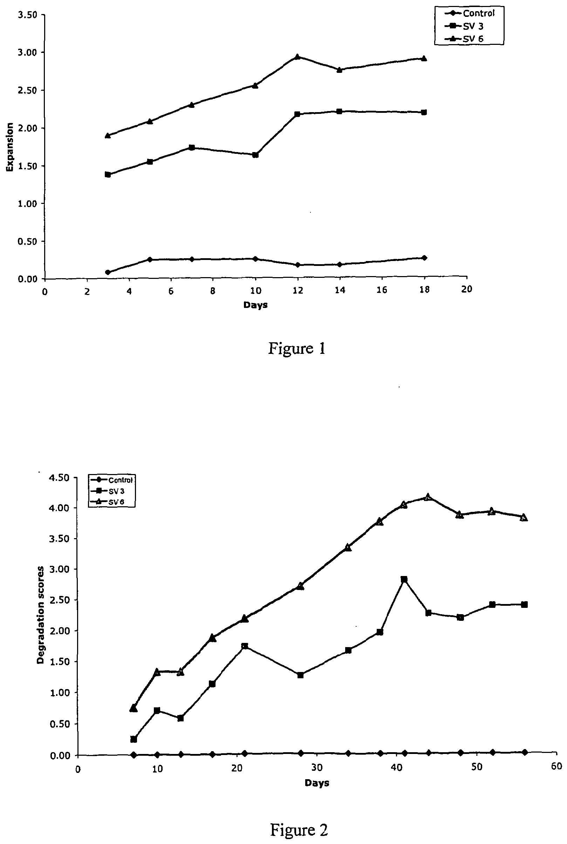

It can be seen that the control sample had very low scores of degradation compared to SV3 and SV6 samples. The degradation level increased along the timeline for the SV3 and SV6 samples, and the SV6 samples - *i.e.* those having the highest molecular weight - were observed to degrade the most. Figure 1 shows a scatter plot of this data.

### Results of concrete slab trial:

This trial was carried out with the cuds on a concrete slab in an environment where they would be exposed to rainfall. The degradation scores are shown in Table 2.

**Table 2**

| Day | Control | | SV 3 | | SV 6 | |
|---|---|---|---|---|---|---|
| | Mean | Std dev | Mean | Std dev | Mean | Std dev |
| 7 | 0.00 | 0.00 | 0.25 | 0.34 | 0.75 | 0.72 |
| 10 | 0.00 | 0.00 | 0.70 | 0.57 | 1.33 | 0.96 |
| 13 | 0.00 | 0.00 | 0.58 | 0.44 | 1.33 | 0.80 |
| 17 | 0.00 | 0.00 | 1.13 | 1.29 | 1.88 | 1.34 |
| 21 | 0.00 | 0.00 | 1.73 | 1.41 | 2.18 | 1.14 |
| 28 | 0.00 | 0.00 | 1.25 | 1.12 | 2.70 | 1.60 |
| 34 | 0.00 | 0.00 | 1.65 | 1.54 | 3.33 | 1.04 |
| 38 | 0.00 | 0.00 | 1.95 | 1.28 | 3.75 | 0.73 |
| 41 | 0.00 | 0.00 | 2.80 | 1.41 | 4.03 | 0.64 |
| 44 | 0.00 | 0.00 | 2.25 | 1.49 | 4.15 | 0.73 |
| 48 | 0.00 | 0.00 | 2.18 | 1.46 | 3.85 | 0.93 |
| 52 | 0.00 | 0.00 | 2.38 | 1.44 | 3.90 | 0.72 |
| 56 | 0.00 | 0.00 | 2.38 | 1.35 | 3.80 | 0.66 |
| Average | 0.00 | 0.00 | 1.63 | 1.43 | 2.84 | 1.50 |

The control sample data was taken from an average from 4 cuds obtained from one sample.

The SV3 sample data was taken from an average of 5 samples obtained from 4 cuds (SV of the Gantrez being from 2.6 to 4.3).

The SV6 sample data was taken from an average from 5 samples obtained from 4 cuds (SV of the Gantrez being from 5.5 to 7.3).

It can be seen that the control sample was characterised by scores of degradation equal to zero. The SV3 samples were characterised by a lower level of degradation than the SV6 samples, but still degraded significantly more substantially than the control.

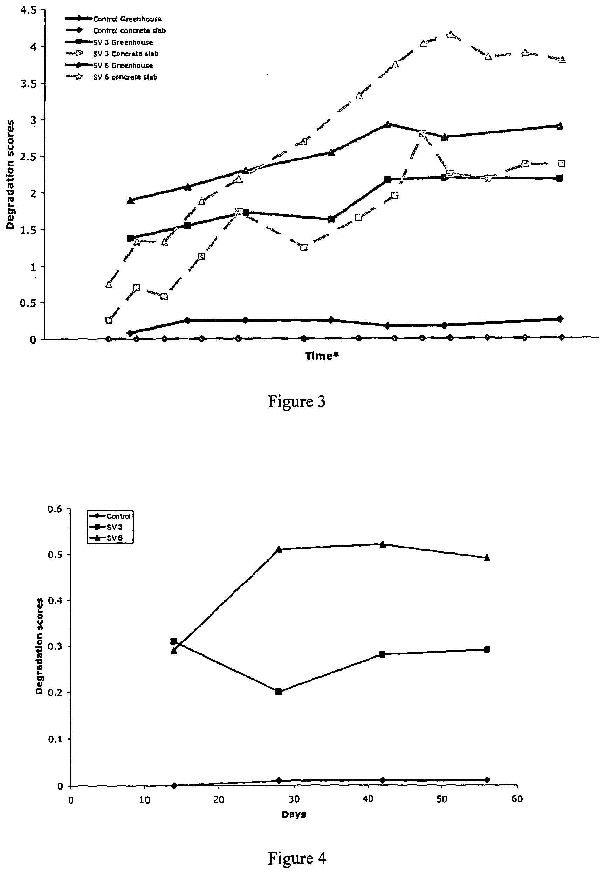

Figure 3 shows a comparison of the data for the gum samples assessed in the greenhouse trial and in the concrete slab trial. The time is spread from 3 to 18 days for the greenhouse trial and from 7 to 56 days for the concrete slab trial. In both tests, SV6 samples performed significantly better than SV3 samples in terms of degradation scores, and in turn, the SV3 samples performed significantly better than the control samples. Figure 2 shows a scatter plot of this data.

### Results of footfall trials:

The degradation scores are shown in Table 3.

**Table 3**

| Day | Control | | SV 3 | | SV 6 | |
|---|---|---|---|---|---|---|
| | Mean | Std dev | Mean | Std dev | Mean | Std dev |
| 14 | 0.00 | 0.00 | 0.31 | 0.51 | 0.29 | 0.54 |
| 28 | 0.01 | 0.07 | 0.20 | 0.45 | 0.51 | 0.67 |
| 42 | 0.01 | 0.07 | 0.28 | 0.52 | 0.52 | 0.66 |
| 56 | 0.01 | 0.07 | 0.29 | 0.55 | 0.49 | 0.64 |
| Average | 0.01 | 0.06 | 0.27 | 0.51 | 0.45 | 0.63 |

The control sample data was taken from an average from 45 cuds, with 5 cuds being removed from foot traffic.

The SV3 sample data was taken from an average of 48 cuds (SV of the Gantrez being from 2.6 to 4.3), with 5 cuds being removed from foot traffic (SV of the Gantrez being from 2.6 to 4.3).

The SV6 sample data was taken from an average from 41 cuds (SV of the Gantrez being from 5.5 to 7.3), with 8 cuds being removed from foot traffic.

It can be seen that the control samples were characterised by scores of degradation equal or close to zero. Both of the SV3 and SV6 samples exhibited significantly higher degradation levels than the control sample. It is worth noting that the weather conditions during this footfall trial coincided with a dry, hot period with only 5 mm of rainwater falling during this time. Under damper conditions, it is expected that the degradation levels would be much higher and emulate those results obtained in the other trials. Figure 3 shows a comparison of the greenhouse trial, from 7 to 56 days for the concrete slab trial and the footfall trial. The time has been rescaled to superimpose the three types of information, so the time is spread from 3 to 18 days for the greenhouse trial, from 7 to 56 days for the concrete slab trial and the footfall trial.

From the above data, it has been demonstrated that a higher SV gives superior degradation in both trials.

### Large Particle Size Components

Samples of Gantrez of various SVs were obtained. These samples were supplied both milled (< 30 µm) and unmilled. Unmilled samples of four specific viscosities (2.6, 4.3, 5.5, 7.3) were sieved to between 425 and 850 µm.

Batches of Trident® gum were made incorporating both milled and sieved Gantrez (8 batches plus control) at 1.5% (*i.e.* 1.5 wt.% of Gantrez in 100 g of gum). The gum samples were then assessed for degradation efficacy. The samples were placed in a greenhouse for 2 weeks and on an external concrete slab for 8 weeks. These assessments were carried out on freshly-made batches.

The degradation of the samples was assessed on the same 0-6 scale as above. In a greenhouse, 3 is the maximum score normally exhibited as the cuds are undisturbed and do not dry out.

### Results of greenhouse trial:

Chewed cuds were deposited on a flooring tile. The tile was placed in a polyethylene tunnel in a greenhouse and subject to regular spraying with water. Cuds were assessed at regular intervals and the extent of degradation was assessed visually against the scale as detailed above. The degradation scores are shown in Table 4.

**Table 4**

| Batch: | Control | Milled SV2.6 | Sieved SV2.6 | Milled SV4.3 | Sieved SV4.3 | Milled SV5.5 | Sieved SV5.5 | Milled SV7.3 | Sieved SV7.3 |
|---|---|---|---|---|---|---|---|---|---|
| Cud 1 | 0 | 1 | 1 | 2 | 3 | 2.5 | 4 | 1 | 2.5 |
| Cud 2 | 0 | 1 | 1 | 1 | 3 | 1 | 3.5 | 1.5 | 4 |
| Cud 3 | 0.5 | 1 | 1 | 1 | 3 | 1 | 3 | 0.5 | 2 5 |
| Cud 4 | 0.5 | 1 | 1 | 1 | 3 | 1 | 3.5 | 2.5 | (Cud missing) |
| **Mean:** | **0** | **1** | **1** | **1.25** | **3** | **1.38** | **3.5** | **1.38** | **3** |
| **Significant difference (p) at 95% C.I.** | | **Not significant** | | **p = 0.006 Significant** | | **p = 0.003 Significant** | | **p = 0.020 Significant** | |

Four replicates of each batch were used. The milled Gantrez has a particle size of <30 µm, while the sieved Gantrez has a particle size diameter of from about 425-850 µm. For all SVs >2.6, higher particle size diameters gave superior degradation under greenhouse conditions.

### Results of external concrete slab trial:

Chewed cuds were deposited on a concrete slab outside a building and exposed to the elements. Cuds were assessed at regular intervals and the extent of degradation was assessed visually against the same degradation scale as above. The degradation scores are shown in Table 5.

**Table 5**

| Batch: | Control | Milled SV2.6 | Sieved SV2.6 | Milled SV4.3 | Sieved SV4.3 | Milled SV5.5 | Sieved SV5.5 | Milled SV7.3 | Sieved SV7.3 |
|---|---|---|---|---|---|---|---|---|---|
| Cud 1 | 0 | 0 | 0 | 0 | 1 | 0 | 3 | 0 | 2.5 |
| Cud 2 | 0 | 0 | 0 | 0 | 1.5 | 0 | 1 | 0 | 3 |
| Cud 3 | 0 | 0 | 0 | 0 | 3 | 0.5 | 2.5 | 0 | 3.5 |
| Cud 4 | 0 | 0.5 | 0 | 0 | 3 | 0 | 2 | 0.5 | 3 |
| **Mean:** | **0** | **0.13** | **0** | **0** | **2.13** | **0.13** | **2.13** | **0.13** | **3** |
| **Significant difference (p) at 95% C.I.** | | **p = 0.39 not significant** | | **p = 0.026 Significant** | | **p = 0.016 Significant** | | **p = 0.001 Significant** | |

The milled Gantrez has a particle size of <30 µm, while the sieved Gantrez has a particle size diameter of from about 425-850 µm. The total rainfall observed during trial was 5 mm. For all SVs >2.6, higher particle size diameters gave superior degradation in concrete slab assessment, as for the greenhouse assessment.

It can clearly be seen from the data in Tables 4 and 5 that the Gantrez with the larger particle size diameters (the higher SV materials) provided significantly improved degradation in the fresh gum samples in comparison to the samples containing the milled Gantrez having the particles sizes of <30 µm.

These results thus clearly demonstrate that the gum bases of the invention, with the hydrophilic precursor component agent having a higher molecular weight or a larger particle size, are capable of providing the improved degradation ability desired for the chewing gums.

It is of course to be understood that the present invention is not intended to be restricted to the foregoing examples which are described by way of example only.

## Claims

1. A gum base composition comprising:
a) a hydrophilic precursor component comprising hydrolysable units, wherein the hydrophilic precursor component is a polymer or salt thereof; and wherein the polymer is selected from a copolymer of methyl vinyl ether and maleic anhydride and/or a salt thereof; copolymers of polystyrene and maleic anhydride and/or a salt thereof; polysuccinimide and/or a salt thereof, and combinations thereof, copolymers of vinyl pyrrolidone and vinyl acetate and/or a salt thereof, and alginates and/or a salt thereof; and
b) an elastomer;
wherein:
i) the hydrophilic precursor component comprising hydrolysable units has an average molecular weight of at least about 1,500,000 Daltons; and
ii) the hydrophilic precursor component comprising hydrolysable units has an average particle size of between 300 microns and 1 mm.

2. The gum base composition according to claim 1, wherein the average molecular weight of the hydrophilic precursor component is from about 2 million Daltons to about 30 million Daltons.

3. The gum base composition according to claim 1 or claim 2, wherein the average molecular weight of the hydrophilic precursor component is from about 4 million Daltons to about 5 million Daltons.

4. The gum base composition according to any preceding claim, wherein the hydrolysable unit is selected from the group consisting of an ester bond or an ether bond.

5. The gum base composition according to any preceding claim, wherein the salt of the polymer comprising hydrolysable units is selected from an alkali metal salt or an alkaline earth metal salt.

6. The gum base composition according to any preceding claim, wherein the polymer is selected from a copolymer of methyl vinyl ether and maleic anhydride and/or a salt thereof

7. The gum base composition according to any preceding claim, wherein the hydrophilic precursor component having hydrolysable units is present in an amount from about 0.1% by weight to about 10% by weight of the total gum base.

8. The gum base composition according to any preceding claim, wherein the elastomer is present in amount of about 5% by weight to about 95% by weight of the gum base composition.

9. The gum base composition according to any preceding claim, wherein said elastomer is selected from the group consisting of polyisobutylene, butyl rubber, styrene-butadiene-styrene rubber, and combinations thereof.

10. The gum base composition according to any preceding claim, further including at least one component which promotes hydrolysis wherein the at least one component which promotes hydrolysis is an alkaline component or a filler component, and wherein the gum base composition degrades faster in the presence of the at least one component that promotes hydrolysis than in the absence of the at least one component that promotes hydrolysis.

11. The gum base composition according to any preceding claim, wherein the hydrophilic precursor component is at least partially encapsulated or dispersed within a barrier material.

12. The gum base composition according to claim 11, wherein the barrier material comprises a substance which does not have a nucleophilic group capable of reacting with the hydrolysable units of the hydrophilic precursor component.

13. The gum base composition according to claim 11 or claim 12, wherein the barrier material is selected from oils and fats, and hydrogenates and emulsions thereof.

14. The gum base composition according to claim 11, wherein the barrier material comprises a substance which possesses a nucleophilic group capable of reacting with the hydrolysable units of the hydrophilic precursor component, wherein the barrier material is able to react with an outer layer of the hydrophilic precursor component comprising hydrolysable units to form a layer comprising a reaction product of the barrier material and the outer layer of the hydrophilic precursor component, between the barrier material and the hydrophilic precursor component.

15. A chewing gum composition comprising the gum base composition according to any preceding claim.

## Patentansprüche

1. Gummibasiszusammensetzung umfassend:
a) eine hydrophile Vorläuferkomponente, umfassend hydrolysierbare Einheiten,
wobei die hydrophile Vorläuferkomponente ein Polymer oder ein Salz davon ist; und wobei das Polymer ausgewählt ist aus einem Copolymer aus Methylvinylether und Maleinsäureanhydrid und/oder Salz davon; Copolymere aus Polystyrol und Maleinsäureanhydrid und/oder ein Salz davon; Polysuccinimid und/oder Salz davon, und Kombinationen davon, Copolymere aus Vinylpyrrolidon und Vinylacetat und/oder ein Salz davon, und Alginate und/oder ein Salz davon; und
b) ein Elastomer;
wobei:
i) die hydrophile Vorläuferkomponente, die die hydrolysierbaren Einheiten umfasst, ein durchschnittliches Molekulargewicht von mindestens etwa 1.500.000 Dalton aufweist; und
ii) die hydrophile Vorläuferkomponente, die die hydrolysierbaren Einheiten umfasst, eine durchschnittliche Teilchengröße zwischen 300 µm und 1 mm aufweist.

2. Gummibasiszusammensetzung nach Anspruch 1, wobei das durchschnittliche Molekulargewicht der hydrophilen Vorläuferkomponente zwischen etwa 2 Millionen Dalton und etwa 30 Millionen Dalton liegt.

3. Gummibasiszusammensetzung nach Anspruch 1 oder Anspruch 2, wobei das durchschnittliche Molekulargewicht der hydrophilen Vorläuferkomponente zwischen etwa 4 Millionen Dalton und etwa 5 Millionen Dalton liegt.

4. Gummibasiszusammensetzung nach einem beliebigen der vorhergehenden Ansprüche, wobei die hydrolysierbare Einheit aus der Gruppe ausgewählt ist, bestehend aus einer Esterbindung oder einer Etherbindung.

5. Gummibasiszusammensetzung nach einem beliebigen der vorhergehenden Ansprüche, wobei das Salz des Polymers, umfassend hydrolysierbare Einheiten, ausgewählt ist aus einem Alkalimetallsalz oder einem Erdalkalimetallsalz.

6. Gummibasiszusammensetzung nach einem beliebigen der vorhergehenden Ansprüche, wobei das Polymer ausgewählt ist aus einem Copolymer aus Methylvinylether und Maleinsäureanhydrid und/oder einem Salz davon.

7. Gummibasiszusammensetzung nach einem beliebigen der vorhergehenden Ansprüche, wobei die hydrophile Vorläuferkomponente mit hydrolysierbaren Einheiten in einer Menge von etwa 0,1 Gew.-% bis etwa 10 Gew.-% der gesamten Gummibasis vorliegt.

8. Gummibasiszusammensetzung nach einem beliebigen der vorhergehenden Ansprüche, wobei das Elastomer in einer Menge von etwa 5 Gew.-% bis etwa 95 Gew. % der Gummibasiszusammensetzung vorliegt.

9. Gummibasiszusammensetzung nach einem beliebigen der vorhergehenden Ansprüche, wobei das Elastomer aus der Gruppe ausgewählt ist, bestehend aus Polyisobutylen, Butylgummi, Styrol-Butadien-Styrol-Gummi und Kombinationen davon.

10. Gummibasiszusammensetzung nach einem beliebigen der vorhergehenden Ansprüche, ferner enthaltend mindestens eine Komponente, welche die Hydrolyse fördert, wobei die mindestens eine Komponente, welche die Hydrolyse fördert, eine alkalische Komponente oder eine Füllstoffkomponente ist, und wobei die Gummibasiszusammensetzung in Anwesenheit der mindestens einen Komponente, welche die Hydrolyse fördert, schneller abgebaut wird, als in Abwesenheit der mindestens einen Komponente, welche die Hydrolyse fördert.

11. Gummibasiszusammensetzung nach einem beliebigen der vorhergehenden Ansprüche, wobei die hydrophile Vorläuferkomponente zumindest teilweise in einem Barrierematerial eingekapselt oder dispergiert ist.

12. Gummibasiszusammensetzung nach Anspruch 11, wobei das Barrierematerial eine Substanz umfasst, die keine nucleophile Gruppe aufweist, welche in der Lage ist, mit den hydrolysierbaren Einheiten der hydrophilen Vorläuferkomponente zu reagieren.

13. Gummibasiszusammensetzung nach Anspruch 11 oder Anspruch 12, wobei das Barrierematerial aus Ölen und Fetten sowie Hydrogenaten und Emulsionen derselben ausgewählt ist.

14. Gummibasiszusammensetzung nach Anspruch 11, wobei das Barrierematerial eine Substanz umfasst, die eine nucleophile Gruppe aufweist, welche in der Lage ist, mit den hydrolysierbaren Einheiten der hydrophilen Vorläuferkomponente zu reagieren, wobei das Barrierematerial in der Lage ist, mit einer Außenschicht der hydrophilen Vorläuferkomponente, umfassend hydrolysierbare Einheiten, zu reagieren, um eine Schicht zu bilden, umfassend ein Reaktionsprodukt aus dem Barrierematerial und der Außenschicht der hydrophilen Vorläuferkomponente, zwischen dem Barrierematerial und der hydrophilen Vorläuferkomponente.

15. Kaugummizusammensetzung, umfassend die Gummibasiszusammensetzung nach einem beliebigen der vorhergehenden Ansprüche.

## Revendications

1. Composition de base de gomme, comprenant :
a) un constituant hydrophile précurseur, comprenant des motifs hydrolysables, le constituant hydrophile précurseur étant un polymère ou l'un de ses sels et dans lequel le polymère est choisi parmi un copolymère d'oxyde méthylvinylique et d'anhydride maléique et/ou ses sels; des copolymères de polystyrène et d'anhydride maléique et/ou leurs sels, le polysuccinimide et/ou ses sels et leurs combinaisons, des copolymères de vinyl pyrrolidone et d'acétate de vinyle et/ou leurs sels et des alginates et/ou leurs sels et
b) un élastomère;
dans laquelle
i) le constituant hydrophile précurseur, comprenant des motifs hydrolysables, a un poids moléculaires moyen d'au moins environ 1.500.000 daltons et
ii) le constituant hydrophile précurseur, comprenant des motifs hydrolysables, a une granulométrie moyenne comprise entre 300 microns et 1 mm.

2. Composition de base de gomme suivant la revendication 1, dans laquelle le poids moléculaire moyen du constituant hydrophile précurseur va d'environ 2 millions de daltons à environ 30 millions de daltons.

3. Composition de base de gomme suivant la revendication 1 ou revendication 2, dans laquelle le poids moléculaire moyen du constituant hydrophile précurseur va d'environ 4 millions de daltons à environ 5 millions de daltons.

4. Composition de base de gomme suivant l'une quelconque des revendications précédentes, dans laquelle le motif hydrolysable est choisi dans le groupe consistant en une liaison ester ou une liaison étheroxyde.

5. Composition de base de gomme suivant l'une quelconque des revendications précédentes, dans laquelle le sel du polymère comprenant des motifs hydrolysables est choisi parmi un sel de métal alcalin ou un sel de métal alcalino-terreux.

6. Composition de base de gomme suivant l'une quelconque des revendications précédentes, dans laquelle le polymère est choisi parmi un copolymère d'oxyde méthylvinylique et d'un anhydride maléique et/ou ses sels.

7. Composition de base de gomme suivant l'une quelconque des revendications précédentes, dans laquelle le constituant hydrophile précurseur, ayant des motifs hydrolysables, représente d'environ 0,1% à environ 10% du poids de la base de gomme totale.

8. Composition de base de gomme suivant l'une quelconque des revendications précédentes, dans laquelle l'élastomère représente d'environ 5% à environ 95% du poids de la composition de base de gomme.

9. Composition de base de gomme suivant l'une quelconque des revendications précédentes, dans laquelle l'élastomère est choisi dans le groupe consistant en le polysobutylène, le caoutchouc butyle, le caoutchouc styrène-butadiène-styrène et leurs combinaisons.

10. Composition de base de gomme suivant l'une quelconque des revendications précédentes, comprenant en outre au moins un constituant, qui favorise l'hydrolyse, le au moins un constituant, qui favorise l'hydrolyse, étant un constituant alcalin ou un constituant de charge, et la composition de base de gomme se décomposant plus rapidement en la présence du au moins un constituant, qui favorise l'hydrolyse, qu'en l'absence du au moins un constituant, qui favorise l'hydrolyse.

11. Composition de base de gomme suivant l'une quelconque des revendications précédentes, dans laquelle le constituant hydrophile précurseur est enrobé ou dispersé, au moins en partie, au sein d'une matière formant barrière.

12. Composition de base de gomme suivant la revendication 11, dans laquelle la matière formant barrière comprend une substance, qui n'a pas de groupe nucléophile apte à réagir sur les motifs hydrolysables du constituant hydrophile précurseur.

13. Composition de base de gomme suivant la revendication 11 ou revendication 12, dans laquelle la matière formant barrière est choisie parmi des huiles et des matières grasses et leurs produits d'hydrogénation et leurs émulsions.

14. Composition de base de gomme suivant la revendication 11, dans laquelle la matière formant barrière comprend une substance, qui a un groupe nucléophile apte à réagir sur les motifs hydrolysables du constituant hydrophile précurseur, la matière formant barrière étant apte à réagir sur une couche extérieure du constituant hydrophile précurseur, comprenant des motifs hydrolysables, pour former une couche comprenant un produit de réaction de la matière formant barrière et de la couche extérieure du constituant hydrophile précurseur entre la matière formant barrière et le constituant hydrophile précurseur.

15. Composition de gomme à mâcher comprenant la composition de base de gomme suivant l'une quelconque des revendications précédentes.
